# EUROPÄISCHE PATENTSCHRIFT

(11) **EP 1 561 138 B1**
(45) Veröffentlichungstag und Bekanntmachung des Hinweises auf die Patenterteilung: **09.01.2008**
(21) Anmeldenummer: 03776828.0
(22) Anmeldetag: 31.10.2003
(51) Int. Cl.: G02B 6/255

(54) **VORRICHTUNG ZUR THERMISCHEN BEHANDLUNG WENIGSTENS EINES LICHTWELLENLEITERS**
DEVICE FOR THERMALLY TREATING AT LEAST ONE OPTICAL FIBRE
DISPOSITIF POUR LE TRAITEMENT THERMIQUE D'AU MOINS UNE FIBRE OPTIQUE

(30) Priorität: 31.10.2002 DE 10250880
(43) Veröffentlichungstag der Anmeldung: 10.08.2005
(73) Patentinhaber: CCS Technology, Inc., Wilmington, DE 19803 (US)
(72) Erfinder: CONTAG, Karsten, 81373 München (DE)
(74) Vertreter: Epping - Hermann - Fischer
(86) Internationale Anmeldenummer: PCT/DE2003/003630
(87) Internationale Veröffentlichungsnummer: WO 2004/040343

(56) Entgegenhaltungen:
- US-A- 4 802 729
- US-A1- 2002 118 908
- PATENT ABSTRACTS OF JAPAN Bd. 0050, Nr. 09 (P-045), 21. Januar 1981 (1981-01-21) -& JP 55 140807 A (NIPPON TELEGR & TELEPH CORP <NTT>), 4. November 1980 (1980-11-04)
- KINOSHITA K ET AL: "End preparation and fusion splicing of an optical fiber array with a CO2 laser" APPLIED OPTICS, OPTICAL SOCIETY OF AMERICA,WASHINGTON, US, Bd. 18, Nr. 19, 1. Oktober 1979 (1979-10-01), Seiten 3256-3260, XP002251526 ISSN: 0003-6935

## Beschreibung

Die vorliegende Erfindung betrifft eine Vorrichtung zur thermischen Behandlung wenigstens eines Lichtwellenleiters mit einer Strahlungsquelle und mit einem optischen System zur Lenkung eines von der Strahlungsquelle ausgestrahlten Strahls auf den Lichtwellenleiter.

Bei einem Verfahren zum thermischen Verspleißen von Lichtwellenleitern werden im allgemeinen zu verbindende Glasfasern durch eine Wärmequelle auf Schmelztemperatur erwärmt und dabei in Kontakt gebracht. Heutige Spleißgeräte benutzen in der Regel eine elektrische Glimmentladung als Energiequelle für den Spleißvorgang. Daneben kann auch ein Laser, vorzugsweise ein CO₂-Laser, als Wärmequelle verwendet werden, der den Vorteil bietet, durch Formung des Strahlprofils am Ort der Spleißstelle und/oder durch Steuerung des Leistungsdichteprofils durch Bewegen des Laserstrahls über der Spleißstelle die Form der Erwärmungszone beeinflussen zu können, wie beispielsweise in der bis zum Anmeldetag der vorliegenden Anmeldung noch nicht veröffentlichten deutschen Patentanmeldung 102 127 16.6 beschrieben. Während des Spleißvorgangs befinden sich die zu verspleißenden Lichtwellenleiter in einer Einflußzone der Laserstrahlung und werden dadurch auf Schmelztemperatur erwärmt. Für die Qualität der erreichten Spleißverbindung sind, neben anderen Parametern, sowohl die Intensität der Erwärmung der Lichtwellenleiter als auch die Größe der Erwärmungszone von Bedeutung.

Ein Problem bei der Verwendung eines Laserstrahls als Wärmequelle besteht darin, daß bei einseitigem Auftreffen des Laserstrahls auf die Lichtwellenleiter ein Temperaturgradient zwischen der dem Laserstrahl zugewandten Seite und der dem Laserstrahl abgewandten Seite der Lichtwellenleiter entsteht.

Dadurch ergibt sich eine Asymmetrie der Spleißstelle, die zu einem unvollständigen Verschweissen beider Enden der Lichtwellenleiter führen kann. Die Spleißqualität, gekennzeichnet insbesondere durch die auftretenden Kopplungsverluste und die Zugfestigkeit des Spleißes, verschlechtert sich bei einseitiger Erwärmung im allgemeinen.

Eine Lösung des Problems könnte darin bestehen, daß die Leistungsdichte am Ort des Spleißes in Verbindung mit der zeitlichen Steuerung der Laserleistung so eingestellt wird, daß der Temperaturgradient über den Faserquerschnitt verringert wird. Insbesondere kann dies durch eine Verringerung der Leistungsdichte in Verbindung mit einer Erhöhung der Spleißdauer erreicht werden. Der Nachteil dieser Lösung besteht darin, daß mit einer Erhöhung der Spleißdauer auch eine Vergrößerung der Erwärmungszone verbunden ist. Dies widerspricht sich mit der Idee, durch Verwendung eines Laserstrahls anstelle einer konventionellen Glimmentladung gezielt die Form der Erwärmungszone zu beeinflussen.

In US 4 263 495 ist ein Verfahren beschrieben, bei dem ein Laser als Energiequelle zum Verspleißen von Lichtwellenleitern verwendet wird. Bei diesem Verfahren wird eine Fokussierung des Laserstrahls vorgenommen, um eine ausreichende Leistungsdichte zu erhalten. Die Strahlung des Lasers wird durch Linsen bzw. Kombinationen aus Linsen und Spiegeln so gebündelt, daß sich ein Fokussierungsbereich, in dem die Strahlung auf die Lichtwellenleiter trifft, mit erhöhter Leistungsdichte ergibt. Die zu verspleißenden Glasfasern werden in diesem Fokussierungsbereich angeordnet, so daß die gewünschte Erwärmung der Lichtwellenleiter erzielt wird.

In diesem Dokument wird insbesondere vorgeschlagen, einen fokussierenden Spiegel zu verwenden, längs dessen Symmetrieachse die zu verspleißenden Fasern positioniert werden. Durch Verwenden eines kollimierten Laserstrahls, der parallel zur Symmetrieachse auf den Spiegel trifft und dessen Leistung symmetrisch um die Symmetrieachse verteilt ist, werden die Lichtwellenleiter bzw. die Spleißtelle im Brennpunkt des Spiegels von allen Seiten erwärmt. Nachteilig an dieser Lösung ist, daß sich bei großer Spiegelbrennweite die Halterungen beider Fasern im optischen Strahlengang befinden, die wiederum zu einer Abschattung und damit zu einer ungleichmäßigen Erwärmung führen. Bei kurzer Spiegelbrennweite befindet sich der Spiegel so nahe an der Spleißtelle, daß beim Spleißprozeß abgedampftes Material sich auf diesem niederschlägt und der Spiegel dadurch häufig gereinigt oder ausgewechselt werden muß.
Ferner wird in US 4 802 729 eine Vorrichtung gemäß dem Oberbegriff des Patentanspruchs 1 beschrieben.

Der vorliegenden Erfindung liegt die Aufgabe zugrunde, eine Vorrichtung zur thermischen Behandlung wenigstens eines Lichtwellenleiters anzugeben, mit der es ermöglicht ist, einen oder mehrere Lichtwellenleiter ohne die oben genannten Nachteile gleichmäßig zu erwärmen.

Diese Aufgabe wird durch eine Vorrichtung gemäß Patentanspruch 1 gelöst.

Gemäß der Erfindung wird durch ein erstes optisches System ein Strahlprofil des ausgesandten Strahls erzeugt, wobei die Ausdehnung des Strahlprofils quer zu einer Längsachse des oder der Lichtwellenleiter mindestens dem Zweifachen eines Durchmessers eines Lichtwellenleiters entspricht. Der oder die Lichtwellenleiter sind in Richtung quer zu einer Längsachse eines der Lichtwellenleiter im Fokussierungsbereich des Strahls, innerhalb dessen die Strahlung auf den oder die Lichtwellenleiter trifft, vollständig außerhalb einer Mittenachse des Strahlprofils positioniert. Mit einem zweiten optischen System, das in Richtung des Strahlengangs des Strahls hinter dem oder den Lichtwellenleitern positioniert ist, wird die seitlich an dem oder den Lichtwellenleitern vorbei transmittierte Strahlung reflektiert und auf den oder die Lichtwellenleiter von einer zweiten Seite gelenkt. Auf diese Weise werden der oder die Lichtwellenleiter von zwei Seiten, vorzugsweise zwei entgegengesetzten Richtungen, von der Strahlung getroffen und erwärmt. Dabei ist das von der einen Seite auftreffende Leistungsdichteprofil vorzugsweise annähernd gleich dem Leistungsdichteprofil, das von der anderen Seite auf den oder die Lichtwellenleiter trifft.

Die Vorrichtung gemäß der Erfindung ist bevorzugt verwendbar für das Verspleißen von mehreren Lichtwellenleitern, insbesondere für das Verspleißen von zwei Lichtwellenleitern, wie einleitend näher beschrieben. Die Vorrichtung ist jedoch auch zur thermischen Behandlung eines oder mehrerer Lichtwellenleiter allgemein geeignet, insbesondere zur thermischen Expansion eines Faserkerns oder zum Vergrößern oder Verkleinern des Faserdurchmessers (sogenanntes "Tapern") eines Lichtwellenleiters.

Mit der Erfindung ist es vorteilhaft ermöglicht, ein einfaches optisches System bereitzustellen, das die Strahlung, bei einer geeigneten Form und Lage des Strahlprofils an der Position des oder der Lichtwellenleiter, aus zwei Richtungen, vorzugsweise entgegengesetzten Richtungen mit annähernd gleicher Leistungsdichte, auf den oder die Lichtwellenleiter richtet. Dabei kann die Vorrichtung so angeordnet werden, daß der oder die Lichtwellenleiter aus beiden Richtungen an der gleichen Position entlang der Längsachse getroffen werden. Die Auslegung erfolgt dabei insbesondere dergestalt, daß dies auch der Fall ist, wenn der Auftreffpunkt der Strahlung auf den oder die Lichtwellenleiter entlang dessen/deren Längsachse(n) bewegt wird.

Das zweite optische System ist derart ausgelegt, daß es das von der Strahlungsquelle ausgestrahlte Strahlprofil in einer Ebene parallel zu einer Lichtwellenleiter-Längsachse andersartig abbildet als in einer Ebene quer zu der Lichtwellenleiter-Längsachse. Ausserdem ist das zweite optische System dergestalt ausgebildet, daß es das Strahlprofil in der Ebene parallel zu der Lichtwellenleiter-Längsachse nicht invertierend abbildet und in der Ebene quer zu der Lichtwellenleiter-Längsachse invertierend abbildet, dabei insbesondere jeweils im annähernden Verhältnis von 1 : 1.

Weitere vorteilhafte Aus- und Weiterbildungen der Erfindung sind in Unteransprüchen angegeben.

Die Erfindung wird im folgenden anhand der in der Zeichnung dargestellten Figuren, die bevorzugte Ausführungsbeispiele zur vorliegenden Erfindung darstellen, näher erläutert.

Nachfolgend werden die Vorteile und bevorzugten Aus- und Weiterbildungen der Erfindung anhand einer bevorzugten Ausführung der Vorrichtung für das Verspleißen von mehreren Lichtwellenleitern beschrieben. Analoges gilt jedoch auch für eine Vorrichtung zur thermischen Behandlung nur eines Lichtwellenleiters.

Es zeigen:
- Figur 1: eine schematische Darstellung einer Ausführungsform einer erfindungsgemäßen Vorrichtung zur Abbildung einer von einem Laser ausgesandten Laserstrahlung auf zu verspleißende Lichtwellenleiter,
- Figur 2: eine schematische Darstellung des Strahlprofils am Ort der Lichtwellenleiter beim ersten Auftreffen, nach Transmission und nach Rückabbildung auf die Lichtwellenleiter,
- Figur 3: eine schematische Darstellung einer ersten Ausführungsform der Erfindung bezüglich des zweiten optischen Systems zur Rückabbildung der Laserstrahlung auf die Lichtwellenleiter,
- Figur 4: eine schematische Darstellung einer zweiten Ausführungsform der Erfindung bezüglich des zweiten optischen Systems zur Rückabbildung der Laserstrahlung auf die Lichtwellenleiter,
- Figur 5: eine schematische Darstellung einer dritten Ausführungsform der Erfindung bezüglich des zweiten optischen Systems zur Rückabbildung der Laserstrahlung auf die Lichtwellenleiter,
- Figur 6: eine schematische Darstellung einer vierten Ausführungsform der Erfindung bezüglich des zweiten optischen Systems zur Rückabbildung der Laserstrahlung auf die Lichtwellenleiter,
- Figur 7: eine schematische Darstellung mehrerer Ausführungsbeispiele für das Verspleißen von mehreren, nebeneinander liegenden Lichtwellenleitern,
- Figur 8: eine Prinzipskizze bezüglich einer weiteren Ausführungsform der Erfindung.

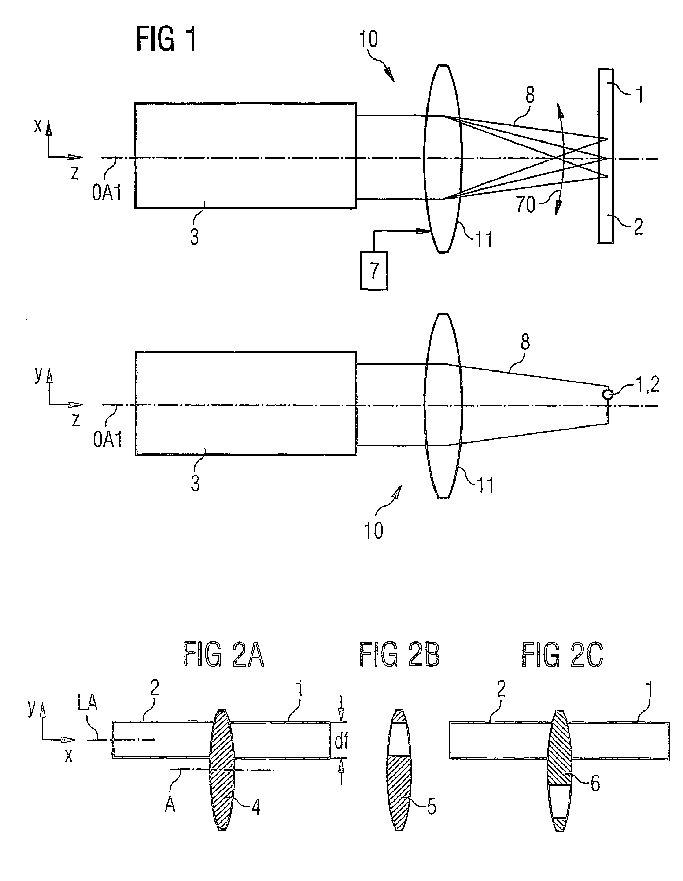

In Figur 1 ist eine schematische Darstellung einer Ausführungsform der erfindungsgemäßen Vorrichtung gezeigt. Dargestellt ist eine Laserstrahlquelle 3 und ein erstes optisches System 10 zum Lenken und vorzugsweise Fokussieren eines von der Laserstrahlquelle ausgestrahlten Laserstrahls 8 auf die Lichtwellenleiterfasern 1 und 2. Das erste optische System 10 beinhaltet auch die Strahlungsoptik des Lasers zum Lenken des Laserstrahls.

Die Figur 1 zeigt beispielhaft eine Abbildung des Laserstrahls 8 auf die zu verspleißenden Fasern aus zwei ortogonalen Richtungen. In der Richtung entlang der Längsachsen der Fasern 1, 2 kann der Laserstrahl 8 in Längsrichtung derselben verschoben werden, insbesondere periodisch bewegt werden (Bewegurgsrichtung 70 der Laserstrahlung 8). Hierzu dient eine schematisch dargestellte Antriebseinrichtung 7, die eine optische Komponente in Form einer Linse 11 derart bewegt, daß eine Position eines Fokussierungsbereiches des Laserstrahls, innerhalb dessen die Strahlung auf die Lichtwellenleiterfasern trifft, in Längsrichtung derselben periodisch verschoben wird. Diesbezüglich ist in Figur 1 nur eine einfache Ausführungsform gezeigt, wobei auch denkbar wäre, den Laserstrahl 8 über eine optische Komponente in Form eines entsprechenden Spiegels abzulenken, und einen solchen Spiegel über eine entsprechende Antriebseinrichtung periodisch zu bewegen. Ein solcher Spiegel kann sich im Strahlengang vor oder hinter der Linse befinden.

Die Linse 11 bzw. das zur Abbildung verwendete optische System 10 ist so ausgelegt, daß am Ort der Fasern 1, 2 die Ausdehnung des Strahlprofils des Laserstrahls 8 quer zur Längsachse der Fasern mindestens doppelt so groß ist, wie der größte Durchmesser der Fasern.

Weiterhin ist in Figur 1 ein Koordinatensystem bestehend aus X-Achse, Y-Achse und Z-Achse dargestellt. Die X-Achse verläuft parallel zur Längsachse der Fasern, die Z-Achse senkrecht dazu. Wiederum senkrecht zur X-Achse und Z-Achse verläuft die Y-Achse in einer dritten Dimension. Die optische Achse des optischen Systems 10 ist mit OA1 bezeichnet.

In Figur 2 ist eine schematische Darstellung des Strahlprofils der Laserstrahlung 8 am Ort der Lichtwellenleiter beim ersten Auftreffen (Figur 2a), nach Transmission (Figur 2b) und nach Rückabbildung auf die Lichtwellenleiter (Figur 2c) gezeigt. Wie aus Figur 2a ersichtlich, befinden sich die Fasern 1, 2 in Richtung quer zur Faserlängsachse LA vollständig außerhalb der Mittenachse A des vorzugsweise symmetrischen Strahlprofils 4 der Laserstrahlung. Die Fasern 1, 2 weisen einen Faserdurchmesser df auf. Die Fasern 1, 2 befinden sich dabei oberhalb oder unterhalb der Mittenachse A des Strahlprofils 4. In Figur 2b ist das durch die Fasern bzw. seitlich an den Fasern vorbei transmittierte Strahlprofil 5 dargestellt, wobei ein Teil der Laserstrahlung durch die Fasern absorbiert wurde (heller Teil des dargestellten Strahlprofils 5). Durch ein geeignetes zweites optisches System wird die Laserstrahlung ein zweites Mal auf die Fasern 1, 2 abgebildet und trifft aus der entgegengesetzten Richtung auf die Fasern. Das resultierende Strahlprofil 6 am Ort der Fasern ist in Figur 2c dargestellt. Hierbei trifft die Strahlung, die nach der ersten Abbildung seitlich an den Fasern transmittiert wurde, nach der zweiten Abbildung auf die Fasern 1, 2.

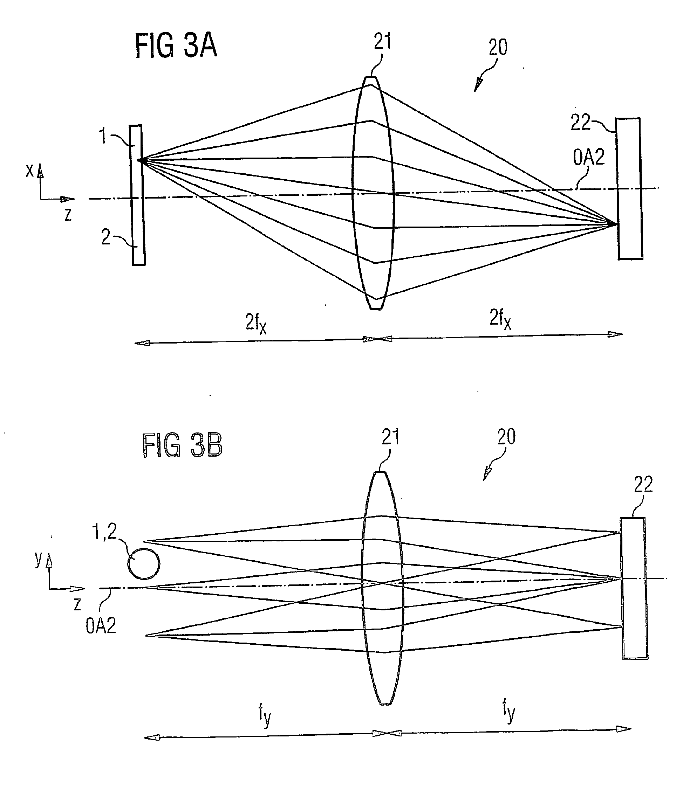

In Figur 3 ist eine schematische Darstellung eines ersten Ausführungsbeispiels der Erfindung bezüglich des zweiten optischen Systems zur Rückabbildung der Laserstrahlung auf die Lichtwellenleiterfasern gezeigt. Das zweite optische System 20 zur Rückabbildung der Laserstrahlung weist einen Planspiegel 22 und eine asphärische Linse 21 auf, wobei die Linse 21 zwischen den Fasern 1, 2 und dem Planspiegel 22 angeordnet ist. Die asphärische Linse 21 weist zwei unterschiedliche Brennweiten fx und fy in der XZ-Ebene parallel zu den Faserlängsachsen bzw. in der YZ-Ebene quer zu den Faserlängsachsen auf. Im vorliegenden Ausführungsbeispiel ist in der XZ-Ebene parallel zu den Faserlängsachsen der Abstand zwischen Linse 21 und den Fasern 1, 2 gleich dem Abstand zwischen der Linse 21 und dem Spiegel 22. Die Brennweite fx der Linse 21 in dieser Ebene beträgt die Hälfte dieses Abstandes. Dadurch wird in dieser Ebene eine nicht invertierende Abbildung des Strahlprofils ungefähr im Maßstab 1 : 1 auf die Fasern erreicht. Auch bei einer Auslenkung des Laserstrahls längs der Faserlängsachsen, wie in Figur 3a dargestellt, trifft in dieser Ebene die Strahlung nach der zweiten Abbildung durch das zweite optische System 20 die Fasern 1, 2 an der gleichen Position, wie bei der ersten Abbildung mittels dem ersten optischen System 10 gemäß Figur 1.

In der YZ-Ebene quer zu den Faserlängsachsen ist die Brennweite fy der asphärischen Linse 21 im wesentlichen gleich dem Abstand der Linse zu den Fasern (Figur 3b). Dadurch wird in dieser Ebene eine invertierende Abbildung des Strahlprofils ungefähr im Maßstab 1 : 1 auf die Fasern erreicht. Dies hat zur Folge, daß die Laserstrahlung, die bei der ersten Abbildung gemäß Figur 1 seitlich an den Fasern transmittiert wurde, nach der zweiten Abbildung durch das optische System 20 auf die Fasern trifft.

Zu den vorgenannten Abständen des Ausführungsbeispiels gemäß Figur 3 sowie zu den Abständen der nachfolgend erläuterten Ausführungsbeispiele ist zu bemerken, daß diese Abstände nicht zwingend sind. Vielmehr ist durch eine geeignete Auslegung des optischen Systems eine Verkleinerung der ausgesandten Laserstrahlung auf dem reflektierenden Spiegel möglich, wobei das verkleinerte Abbild bei der Rückabbildung auf die Fasern wieder entsprechend vergrößert wird. Entsprechend sind die Abstände zwischen den optischen Komponenten einzustellen. Weiterhin ist festzuhalten, daß die genannten Abstände zwischen den optischen Elementen und den Fasern nur ungefähre Werte darstellen, die sich bei genauer Auslegung der optischen Abbildung ändern können. In diesem Zusammenhang sind insbesondere die Dicken der Linsen von Bedeutung. Nach bisheriger Erkenntnis ist davon auszugehen, daß sich die Abstände im Bereich von etwa 10% aufgrund der erwähnten genauen Auslegung ändern können.

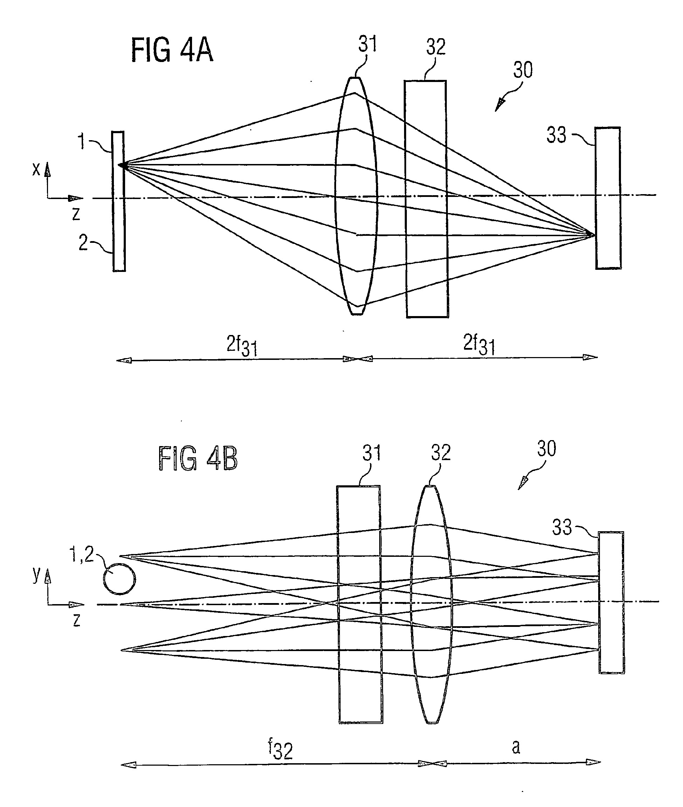

In Figur 4 ist eine weitere schematische Darstellung einer zweiten Ausführungsform der Erfindung bezüglich des zweiten optischen Systems zur Rückabbildung der Laserstrahlung auf die Lichtwellenleiterfasern gezeigt. Dieses besonders günstige Ausführungsbeispiel bezüglich des zweiten optischen Systems 30 enthält als optische Elemente einen Planspiegel 33 sowie zwei Zylinderlinsen 31 und 32. Im vorliegenden Ausführungsbeispiel ist der Abstand der Linse 31 zu den Fasern 1, 2 gleich dem Abstand der Linse 31 zu dem Spiegel 33. Die Brennweite f31 der Linse 31 in der XZ-Ebene parallel zu den Faserachsen entspricht der Hälfte dieses Abstands. Die zweite Linse 32 besitzt in der XZ-Ebene keine Brechkraft. In dieser Ebene wird dadurch eine nicht invertierende Abbildung des Strahlprofils annähernd im Maßstab 1 : 1 auf die Fasern erreicht.

In der YZ-Ebene quer zu den Faserachsen besitzt die zweite Linse 32 eine Brennweite f32, die ihrem Abstand zu den Fasern 1, 2 entspricht. Der Abstand a zwischen der Linse 32 und dem Spiegel 33 ist dabei innerhalb praktikabler Grenzen beliebig. Es ist auch möglich, die Linse 32 vor der Linse 31 zu positionieren (a > 2f31 bzw. f32 < 2f31). Die Linse 31 besitzt in der YZ-Ebene keine Brechkraft. In dieser Ebene wird dadurch eine invertierende Abbildung annähernd im Maßstab 1 : 1 auf die Fasern erreicht.

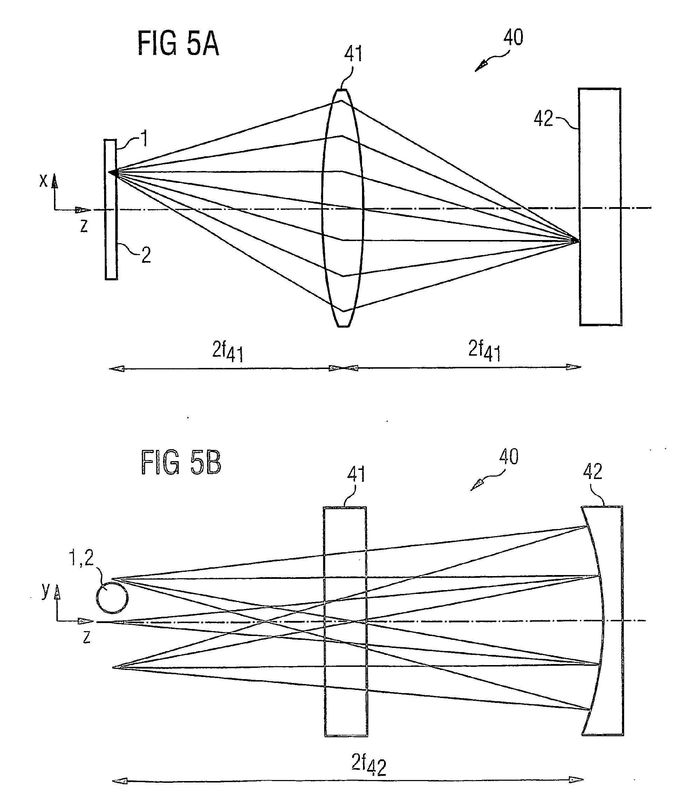

In Figur 5 ist eine schematische Darstellung eines dritten Ausführungsbeispiels der Erfindung bezüglich des zweiten optischen Systems.zur Rückabbildung der Laserstrahlung auf die Lichtwellenleiterfasern gezeigt. Dieses ebenfalls besonders günstige Ausführungsbeispiel des zweiten optischen Systems 40 weist eine Zylinderlinse 41 sowie einen in der YZ-Ebene konkaven Zylinderspiegel 42 auf. Der Abstand der Zylinderlinse 41 zu den Fasern 1, 2 ist im vorliegenden Ausführungsbeispiel gleich dem Abstand der Linse 41 zu dem Spiegel 42. Die Brennweite f41 der Linse 41 in der XZ-Ebene parallel zu den Faserlängsachsen entspricht der Hälfte dieses Abstands. Der Spiegel 42 besitzt in dieser Ebene keine fokussierende Wirkung, das heißt er ist in der XZ-Ebene plan ausgeführt. In dieser Ebene wird dadurch eine nicht invertierende Abbildung des Strahlprofils annähernd im Maßstab 1 : 1 auf die Fasern erreicht.

In der YZ-Ebene quer zu den Faserlängsachsen besitzt der Spiegel 42 eine Brennweite f42, die im vorliegenden Ausführungsbeispiel der Hälfte des Abstandes des Spiegels 42 zu den Fasern 1,2 entspricht (Figur 5b). Die Zylinderlinse 41 besitzt in der YZ-Ebene keine Brechkraft. In dieser Ebene wird dadurch eine invertierende Abbildung durch das optische System 40 annähernd im Maßstab 1 : 1 auf die Fasern erreicht.

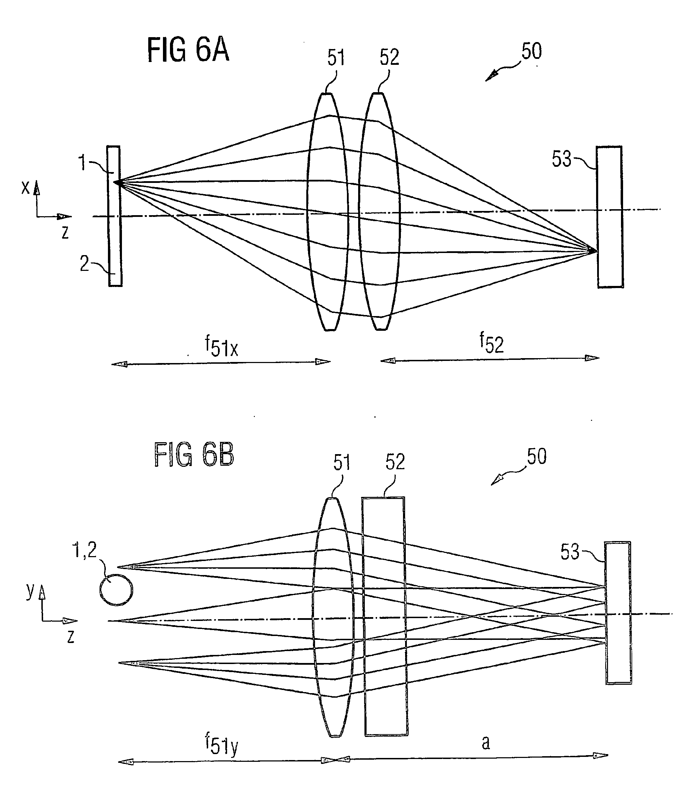

In Figur 6 ist eine weitere schematische Darstellung einer vierten Ausführungsform der Erfindung bezüglich des zweiten optischen Systems zur Rückabbildung der Laserstrahlung auf die Lichtwellenleiterfasern gezeigt. Dieses Ausführungsbeispiel bezüglich des zweiten optischen Systems 50 enthält als optische Elemente einen Planspiegel 53 sowie eine Zylinderlinse 52 und eine sphärische Linse 51. Die sphärische Linse 51 hat in beiden Ebenen xz und yz eine gleiche Brechkraft f51x und f51y. Die Zylinderlinse 52 hat vorzugsweise in der yz-Ebene keine Brechkraft. Die Brennweite der sphärischen Linse 51 ist in diesem Beispiel im wesentlichen gleich dem Abstand dieser Linse zu den Lichtwellenleitern. Der Abstand a zwischen der Linse 51 und dem Spiegel 53 ist dabei innerhalb praktikabler Grenzen beliebig.

Es wäre auch der Einsatz einer defokussierenden Zylinderlinse in Kombination mit einer fokussierenden sphärischen Linse denkbar. In diesem Fall hätte die Zylinderlinse in der xz-Ebene keine Brechkraft. In der yz-Ebene ergäbe sich dann eine resultierende Brennweite aus beiden Linsen. Der Abstand eines zu der Summe beider Linsen äquivalent wirkenden Elements zu den Lichtwellenleitern wäre gleich dieser resultierenden Brennweite.

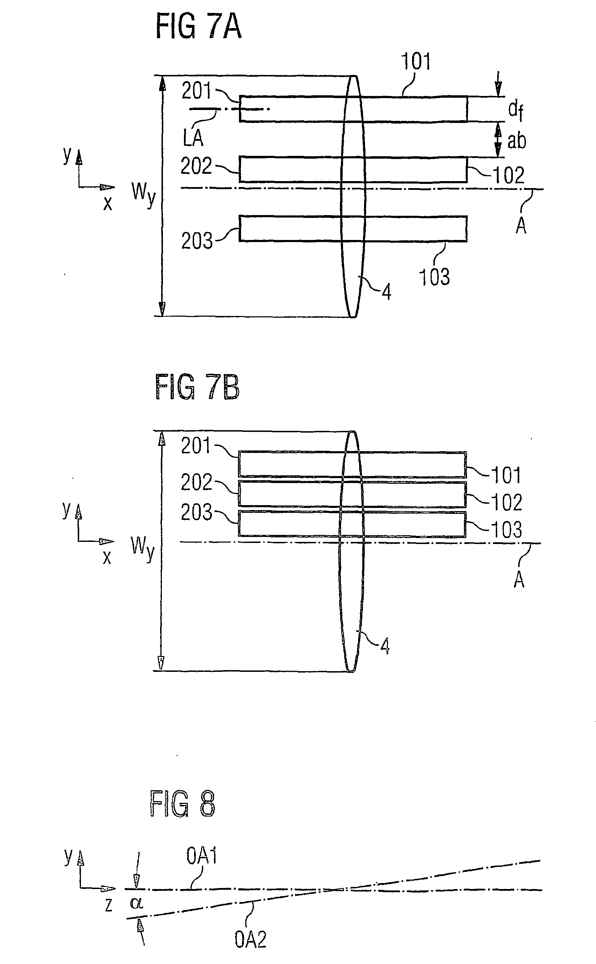

In Figur 7 ist eine schematische Darstellung mehrerer Ausführungsbeispiele gemäß der Erfindung für das Verschweissen von mehreren nebeneinander liegenden Lichtwellenleiterfasern gezeigt. Die erfindungsgemäße Vorrichtung ist dabei derart ausgelegt, daß mehrere nebeneinander angeordnete Lichtwellenleiter 101 bis 103, die beispielsweise ein Faserbändchen bilden, mit entsprechend gegenüberliegenden Lichtwellenleiterfasern 201 bis 203 parallel verschweißbar sind. Damit können alle Fasern zweier Lichtwellenleiter-Faserbändchen gleichzeitig miteinander verschweißt werden. Hierzu kann eine optische Anordnung, wie vorstehend anhand der erläuterten Ausführungsbeispiele beschrieben, im Prinzip unverändert verwendet werden. Lediglich das Strahlprofil der ersten optischen Abbildung der Laserstrahlung am Ort der Lichtwellenleiterfasern ist entsprechend auszulegen. Hierzu sind zwei mögliche Ausführungsbeispiele exemplarisch für drei Faserpaare in Figur 7 dargestellt.

In Figur 7a entspricht der Abstand ab zwischen zwei nebeneinanderliegenden Fasern 101 und 102 mindestens dem größten Durchmesser df der Fasern. Die Ausdehnung Wy des Strahlprofils quer zu den Faserachsen entspricht mindestens der Summe der Durchmesser df aller nebeneinander liegender Lichtwellenleiter 101 bis 103 bzw. 201 bis 203 und der zwischenliegenden Abstände ab. Auch der äußersten Faser 103 bzw. 203 ist ein entsprechender Abstand zugeordnet, das heißt, das Strahlprofil 4 erstreckt sich über den äußersten Lichtwellenleiter 103, 203 um eine Länge in Größe mindestens eines Durchmessers df einer Faser hinaus. Die Fasern sind derart angeordnet, daß bei Spiegelung um die horizontale Mittenachse A des Strahlprofils 4 jede gespiegelte Faser in einem Zwischenraum zwischen zwei nicht gespiegelten Fasern zu liegen kommt.

In dem Ausführungsbeispiel gemäß Figur 7b befinden sich die Faserpaare jenseits der Mittenachse A des Strahlprofils 4, das heißt entweder oberhalb oder unterhalb der horizontalen Mittenachse A. Die Ausdehnung Wy des Strahlprofils quer zu den Faserlängsachsen entspricht mindestens der zweifachen Summe der Durchmesser aller nebeneinander liegender Fasern und der dazwischenliegenden Abstände.

Mit der erfindungsgemäßen Vorrichtung zum Verspleißen von Lichtwellenleitern gemäß der vorstehend beschriebenen Ausführungsbeispiele werden die zu verspleißenden Lichtwellenleiterfasern aus zwei entgegengesetzten Richtungen von der Laserstrahlung mit annähernd gleicher Leistungsdichte getroffen und erwärmt. Damit kann die Spleißqualität, gekennzeichnet insbesondere durch Kopplungsverluste und die Zugfestigkeit des Spleißes, im Vergleich zu einer einseitigen Erwärmung verbessert werden. Durch das optische System wird dabei erreicht, daß die Laserstrahlung aus beiden Richtungen an der gleichen Position entlang der Faserlängsachsen auf die Fasern trifft. Dies ist insbesondere auch dann der Fall, wenn der Auftreffpunkt der Laserstrahlung auf die Fasern entlang der Faserachsen bewegt wird, wie insbesondere in Figur 1 schematisch dargestellt.

Insbesondere beim Verschweissen von mehreren Fasern ist ein Strahlprofil am Ort der Fasern besonders vorteilhaft, dessen Ausdehnung und Leistungsdichte in Richtung der Faserlängsachsen an jeder Position quer zu den Faserlängsachsen annähernd gleich groß ist. Dies kann beispielsweise mittels eines diffraktiv wirkenden optischen Elements erreicht werden, das beispielsweise mit der Linse 11 gemäß Figur 1 kombiniert ist. Der große Vorteil einer diffraktiv wirkenden optischen Anordnung besteht darin, daß die Strahlform und damit die Leistungsverteilung im Fokussierungsbereich durch die Gestaltung des diffraktiv wirkenden optischen Elements in weiten Grenzen an die individuellen Bedingungen der Spleißanordnung angepaßt werden kann. Die Wirkungsweise eines diffraktiv wirkenden optischen Elements beruht dabei auf der Beugung von Lichtwellen, an feinen Strukturen.

In allen beschriebenen Ausführungsbeispielen kann es vorteilhaft sein, wenn innerhalb der YZ-Ebene quer zu den Faserlängsachsen ein geringer Winkel α zwischen der optischen Achse OA1 des ersten optischen Systems und der optischen Achse OA2 des zweiten optischen Systems vorgesehen wird, wie anhand von Figur 8 in Verbindung mit den Figuren 1 und 3 schematisch dargestellt. Dadurch kann eine Rückreflexion von Laserstrahlung in die Laserstrahlquelle vermieden oder reduziert werden.

Anstelle jedes in den Ausführungsbeispielen genannten optischen Elements (Linse, Spiegel) kann jeweils auch eine analog wirkende Kombination von optischen Elementen verwendet werden, die in ihrer Summenwirkung im wesentlichen die gleichen relevanten Eigenschaften aufweist wie das jeweilige Einzelelement. Dies kann insbesondere zum Ausgleichen von Abbildungsfehlern vorteilhaft sein.

Mit der erfindungsgemäßen Vorrichtung können auch Fasern mit unterschiedlichen Außendurchmessern miteinander verschweißt werden. Dabei können unterschiedliche Außendurchmesser sowohl zwischen zwei zu verschweißenden Fasern als auch zwischen verschiedenen Faserpaaren auftreten. Die erfindungsgemäße Vorrichtung kann auch zum Spleißen von Lichtwellenleitern an optische Bauteile (etwa Chips wie z. B. sogenannte Wellenlängenmultiplexer, Koppler etc.) verwendet werden. Beim Spleißen von Lichtwellenleitern an optische Bauteile ist sozusagen einer der zu verspleißenden Lichtwellenleiter ein Lichtwellenleiter im optischen Bauteil.

## Patentansprüche

1. Vorrichtung zur thermischen Behandlung wenigstens eines Lichtwellenleiters
- mit einer Strahlungsquelle (3) zur thermischen Behandlung wenigstens eines Lichtwellenleiters (1, 2),
- mit einem ersten optischen System (10) zur Lenkung eines von der Strahlungsquelle ausgestrahlten Strahls (8) auf den Lichtwellenleiter (1, 2) von einer ersten Seite,
- bei der das erste optische System (10) ein Strahlprofil (4) des Strahls erzeugt, dessen Ausdehnung quer zu einer Längsachse (LA) des Lichtwellenleiters mindestens dem Zweifachen des Durchmessers (df) des Lichtwellenleiters entspricht,
- bei der der Lichtwellenleiter (1,2) in Richtung quer zu der Längsachse (LA) des Lichtwellenleiters im Fokussierungsbereich des Strahls, innerhalb dessen die strahlung auf den Lichtwellenleiter trifft, vollständig außerhalb einer Mittenachse (A) des Strahlprofils (4) positioniert ist,
- mit einem zweiten optischen System (20, 30, 40), das in Richtung eines Strahlengangs des Strahls hinter dem Lichtwellenleiter (1, 2) positioniert ist, und das eine seitlich an dem Lichtwellenleiter vorbei transmittierte Strahlung (5) reflektiert und auf den Lichtwellenleiter (1, 2) von einer zweiten Seite lenkt,
- **dadurch gekennzeichnet, daß** das zweite optische System (20, 30, 40) so ausgelegt ist, daß es das Strahlprofil (4) in einer ersten Ebene (xz), die von einer Längsachse (x) und einer Querachse (z) des Lichtwellenleiters aufgespannt wird, nicht invertierend abbildet und in einer zweiten Ebene (yz), die von der Querachse (z) und einer weiteren Querachse (y) des Lichtwellenleiters aufgespannt wird, invertierend abbildet, jeweils im annähernden Verhältnis von 1:1, wobei die Längsachse (X) in einer Längsrichtung des Lichtwellenleiters verläuft und die beiden Querachsen (z, y) quer zur Längsachse verlaufen und die Längsachse (x) und die beiden Querachsen (z, y) zueinander orthogonal verlaufen.

2. Vorrichtung nach Anspruch 1,
**dadurch gekennzeichnet, daß**
das zweite optische System (20) einen Planspiegel (22) und eine asphärische Linse (21), bzw. eine jeweilige analog wirkende Kombination von optischen Elementen, enthält, wobei die Linse zwischen dem Lichtwellenleiter und dem Planspiegel angeordnet ist.

3. Vorrichtung nach Anspruch 2,
**dadurch gekennzeichnet, daß**
die asphärische Linse (21) zwei unterschiedliche Brennweiten (fx, fy) in der ersten Ebene (xz) und in der zweiten Ebene (yz) aufweist.

4. Vorrichtung nach Anspruch 2 oder 3,
**dadurch gekennzeichnet, daß**
in der zweiten Ebene (yz) eine Brennweite (fy) der asphärischen Linse (21) im wesentlichen gleich dem Abstand der Linse zu dem Lichtwellenleiter ist.

5. Vorrichtung nach Anspruch 1,
**dadurch gekennzeichnet, daß**
- das zweite optische System (30) einen Planspiegel (33) und zwei Zylinderlinsen (31, 32), bzw. eine jeweilige analog wirkende Kombination von optischen Elementen, enthält,
- die Linsen zwischen dem Lichtwellenleiter und dem Planspiegel angeordnet sind,
- eine erste der Linsen (32) in der ersten Ebene (xz) und eine zweite der Linsen (31) in der zweiten Ebene (yz) keine Brechkraft aufweist.

6. Vorrichtung nach Anspruch 1,
**dadurch gekennzeichnet, daß**
- das zweite optische System (50) einen Planspiegel (53), eine sphärische Linse (51) und eine Zylinderlinse (52), bzw. eine jeweilige analog wirkende Kombination von optischen Elementen, enthält,
- die Linsen zwischen dem Lichtwellenleiter (1, 2) und dem Planspiegel angeordnet sind,
- die sphärische Linse (51) in der ersten Ebene (xz) und in der zweiten Ebene (yz) die gleiche Brechkraft (f51x, f51y) und die Zylinderlinse in der zweiten Ebene (yz) keine Brechkraft aufweist.

7. Vorrichtung nach einem der Ansprüche 5 oder 6,
**dadurch gekennzeichnet, daß**
in der zweiten Ebene (yz) eine Brennweite (f32, f51y) einer der Linsen (32, 51) im wesentlichen gleich dem Abstand dieser Linse zu den Lichtwellenleitern ist.

8. Vorrichtung nach Anspruch 1,
**dadurch gekennzeichnet, daß**
- das zweite optische System (40) einen in der zweiten Ebene (yz) konkaven Zylinderspiegel (42) und eine Zylinderlinse (41), bzw. eine jeweilige analog wirkende Kombination von optischen Elementen, enthält,
- die Zylinderlinse zwischen dem Lichtwellenleiter und dem Zylinderspiegel angeordnet ist,
- die Zylinderlinse (41) in der zweiten Ebene (yz) keine Brechkraft aufweist, und der Zylinderspiegel (42) in der ersten Ebene (xz) plan ist.

9. Vorrichtung nach Anspruch 8,
**dadurch gekennzeichnet, daß**
in der zweiten Ebene (yz) eine Brennweite (f42) des Zylinderspiegels (42) im wesentlichen die Hälfte des Abstands des Zylinderspiegels zu dem Lichtwellenleiter beträgt.

10. Vorrichtung nach einem der Ansprüche 1 bis 9,
**dadurch gekennzeichnet, daß**
die Vorrichtung derart ausgelegt ist, daß mehrere nebeneinander angeordnete Lichtwellenleiter (101 bis 103) parallel thermisch behandelbar sind, inbesondere mit entsprechend gegenüberliegenden Lichtwellenleitern (201 bis 203) parallel verschweißbar sind.

11. Vorrichtung nach Anspruch 10,
**dadurch gekennzeichnet, daß**
- ein Abstand (ab) zwischen zwei nebeneinander liegenden Lichtwellenleitern (101, 102; 201, 202) mindestens einem Durchmesser (df) der Lichtwellenleiter entspricht,
- die Ausdehnung (Wy) des Strahlprofils (4) quer zu einer Längsachse eines der Lichtwellenleiter im Fokussierungsbereich mindestens der Summe der Durchmesser (df) aller nebeneinander liegender Lichtwellenleiter (101 bis 103; 201 bis 203) und der zwischenliegenden Abstände (ab) entspricht, wobei das Strahlprofil (4) sich über einen äußersten Lichtwellenleiter (103, 203) um eine Länge in Größe mindestens eines Durchmessers (df) eines der Lichtwellenleiter hinaus erstreckt.

12. Vorrichtung nach Anspruch 11,
**dadurch gekennzeichnet, daß**
- die nebeneinander liegenden Lichtwellenleiter (101 bis 103; 201 bis 203) jenseits einer Mittenachse (A) des Strahlprofils (4) angeordnet sind,
- die Ausdehnung (Wy) des Strahlprofils quer zu einer Längsachse eines der Lichtwellenleiter im Fokussierungsbereich mindestens der zweifachen Summe der Durchmesser aller nebeneinander liegender Lichtwellenleiter und der zwischenliegenden Abstände entspricht.

13. Vorrichtung nach einem der Ansprüche 1 bis 12,
**dadurch gekennzeichnet, daß**
in der zweiten Ebene (yz) ein Winkel (α) zwischen einer optischen Achse des ersten optischen Systems (OA1) und einer optischen Achse des zweiten optischen Systems (OA2) vorgesehen ist.

14. Vorrichtung nach einem der Ansprüche 1 bis 13,
**dadurch gekennzeichnet, daß**
das erste optische System (10) ein diffraktiv wirkendes optisches Element (11) aufweist.

15. Vorrichtung nach einem der Ansprüche 1 bis 14,
**dadurch gekennzeichnet, daß**
- das erste optische System (10) eine optische Komponente (11) aufweist, um den Strahl (8) auf die zu verspleißenden Lichtwellenleiter (1, 2) zu richten,
- die Vorrichtung eine Antriebseinrichtung (7) für die optische Komponente (11) aufweist, wobei die optische Komponente mit Hilfe der Antriebseinrichtung derart bewegbar ist, daß eine Position des Fokussierungsbereichs des Strahls in Längsrichtung (70) derselben verschiebbar, insbesondere periodisch bewegbar ist.

## Claims

1. A device for thermally treating at least one optical waveguide, comprising:
- a radiation source (3) for thermally treating at least one optical waveguide (1, 2),
- a first optical system (10) for directing a beam (8), emitted by the radiation source, onto the optical waveguide (1, 2) from a first side,
- wherein the first optical system (10) generates a beam profile (4) of the beam whose extent in the transverse direction with respect to a longitudinal axis (LA) of the optical waveguide corresponds to at least twice a diameter (df) of the optical waveguide,
- wherein the optical waveguide (1, 2) is positioned completely outside a center axis (A) of the beam profile (4) in the transverse direction with respect to the longitudinal axis (LA) of the optical waveguide in the focusing area of the beam inside which the radiation strikes the optical waveguide,
- a second optical system (20, 30, 40) which is positioned behind the optical waveguide (1, 2) in the direction of a beam path of the beam and which reflects radiation (5) which is transmitted past the side of the optical waveguide and directs it onto the optical waveguide (1, 2) from a second side,
**characterized in that** the second optical system (20, 30, 40) is configured in such a way that it images the beam profile (4) in a noninverted fashion in a first plane (xz) spanned by a longitudinal axis (x) and a transversal axis (z) of the optical waveguide and images it in an inverted fashion in a second plane (yz) spanned by the transversal axis (z) and another transversal axis (y) of the optical waveguide, in particular in each case with an approximate ratio of 1:1, the longitudinal axis (x) extending in a longitudinal direction of the optical waveguide and both of the transversal axis (z, y) extending transversely with respect to the longitudinal axis, the longitudinal axis (x) and both of the transversal axis (z, y) extending perpendicularly with respect to each other.

2. The device as claimed in claim 1, **characterized in that** the second optical system (20) contains a plane mirror (22) and an aspherical lens (21) or a respective combination of optical elements which acts in an analogous fashion, wherein the lens is arranged between the optical waveguide and the plane mirror.

3. The device as claimed in claim 2, **characterized in that** the aspherical lens (21) comprises two different focal lengths (fx, fy) in the first plane (xz) and in the second plane (yz).

4. The device as claimed in claim 2 or 3,
**characterized in that** in the second plane (yz) a focal length (fy) of the aspherical lens (21) is essentially equal to the distance between the lens and the optical waveguide.

5. The device as claimed in claim 1, **characterized in that**
- the second optical system (30) contains a plane mirror (33) and two cylindrical lenses (31, 32) or a respective combination of optical elements which acts in an analogous fashion,
- the lenses are arranged between the optical waveguide and the plane mirror,
- a first lens of the lenses (32) does not have any refractive power in the first plane (xz) and a second lens of the lenses (31) does not have any refractive force in the second plane (yz).

6. The device as claimed in claims 1, **characterized in that**
- the second optical system (50) contains a plane mirror (53), a spherical lens (51) and a cylindrical lens (52) or a respective combination of optical elements which acts in an analogous fashion,
- the lenses are arranged between the optical waveguide (1, 2) and the plane mirror,
- the spherical lens (51) comprises the same refractive power (f51x, f51y) in the first plane (xz) and in the second plane (yz), and the cylindrical lens does not have any refractive power in the second plane (yz) .

7. The device as claimed in one of claims 5 or 6, **characterized in that** a focal length (f32, f51y) of one of the lenses (32, 51) is essentially equal to the distance between this lens and the optical waveguides in the second plane (yz).

8. The device as claimed in claim 1, **characterized in that**
- the second optical system (40) contains a cylindrical mirror (42) which is concave in the second plane (yz), and a cylindrical lens (41), or a respective combination of optical elements which acts in an analogous fashion,
- the cylindrical lens is arranged between the optical waveguide and the cylindrical mirror,
- the cylindrical lens (41) does not have any refractive power in the second plane (yz), and the cylindrical mirror (42) is planar in the first plane (xz).

9. The device as claimed in claim 8, **characterized in that** in the second plane (yz) a focal length (f42) of the cylindrical mirror (42) is essentially half the distance between the cylindrical mirror and the optical waveguide.

10. The device as claimed in one of claims 1 to 9,
**characterized in that** the device is configured in such a way that a plurality of optical waveguides (101 to 103) which are arranged one next to the other can be treated thermally in parallel, in particular can be welded in parallel with optical waveguides (201 to 203) lying correspondingly opposite.

11. The device as claimed in claim 10, **characterized in that**
- a distance (ab) between two optical waveguides (101, 102; 201, 202) lying one next to the other corresponds to at least a diameter (df) of the optical waveguide,
- the extent (Wy) of the beam profile (4) extending transversely with respect to a longitudinal axis of one of the optical waveguides in the focusing area corresponds to at least the sum of the diameters (df) of all the optical waveguides (101 to 103; 201 to 203) lying one next to the other and of the intermediate distances (ab), wherein the beam profile (4) extends over an outermost optical waveguide (103, 203) by a length of the order of magnitude of at least one diameter (df) of one of the optical waveguides.

12. The device as claimed in claim 11, **characterized in that**
- the optical waveguides (101 to 103; 201 to 203) lying one next to the other are arranged on the opposite side of a center axis (A) of the beam profile (4),
- the extent (Wy) of the beam profile extending transversely with respect to a longitudinal axis of one of the optical waveguides in the focusing area corresponds to at least twice the sum of the diameters of all the optical waveguides lying one next to the other and of the intermediate distances.

13. The device as claimed in one of claims 1 to 12, **characterized in that** in the second plane (yz) an angle (α) is provided between an optical axis of the first optical system (OA1) and an optical axis of the second optical system (OA2).

14. The device as claimed in one of claims 1 to 13, **characterized in that** the first optical system (10) comprises a diffractively acting optical element (11).

15. The device as claimed in one of claims 1 to 14, **characterized in that**
- the first optical system (10) comprises an optical component (11) for directing the beam (8) onto the optical waveguide (1, 2) to be spliced,
- the device comprises a drive device (7) for the optical component (11), wherein the optical component can be moved with the aid of the drive device in such a way that a position of the focusing area of the beam can be shifted in its longitudinal direction (70), in particular can be moved periodically.

## Revendications

1. Dispositif de traitement thermique d'au moins une fibre optique,
- comprenant une source (3) de rayonnement pour le traitement thermique d'au moins une fibre (1, 2) optique,
- comprenant un premier système (10) optique pour dévier un faisceau (8) émis par la source de rayonnement sur la fibre (1, 2) optique d'un premier côté,
- dans lequel le premier système (10) optique produit un profil (4) du rayonnement, dont l'étendue transversalement à un axe (LA) longitudinal de la fibre optique correspond au moins à deux fois le diamètre (df) de la fibre optique,
- dans lequel la fibre (1, 2) optique est, dans la direction transversalement à l'axe (LA) longitudinal de la fibre optique dans la zone de focalisation du faisceau à l'intérieur de laquelle le rayonnement arrive sur la fibre optique, entièrement à l'extérieur d'un axe (A) médian du profil (4) du faisceau,
- comprenant un deuxième système (20, 30, 40) optique qui est, dans la direction d'un trajet du faisceau, placé derrière la fibre (1, 2) optique et qui réfléchit un rayonnement (6) transmis en passant latéralement devant la fibre optique et le dévie sur la fibre (1, 2) optique d'un deuxième côté,
- **caractérisé en ce que** le deuxième système (20, 30, 40) optique est tel qu'il reproduit sans inversion le profil (4) du faisceau dans un premier plan (xz) qui passe par un axe (x) longitudinal et par un axe (z) transversal de la fibre optique et le reproduit avec inversion dans un deuxième plan (yz) qui passe par l'axe (z) transversal et un autre axe (y) transversal de la fibre optique respectivement à peu près dans le rapport de 1 :1, l'axe (x) longitudinal s'étendant dans une direction longitudinale de la fibre optique et les deux axes (z, x) transversaux s'étendant transversalement à l'axe longitudinal et l'axe (x) longitudinal et les deux axes (z, y) transversaux étant orthogonaux entre eux.

2. Dispositif suivant la revendication 1,
**caractérisé en ce que**
le deuxième système (20) optique comporte un miroir (22) plan et une lentille (21) asphérique ou une combinaison ayant une effet analogue d'éléments optiques, la lentille étant disposée entre la fibre optique et le miroir plan.

3. Dispositif suivant la revendication 2,
**caractérisé en ce que**
la lentille (21) asphérique a deux distances focales (fx, fy) différentes dans le premier plan (xz) et dans le deuxième plan (yz).

4. Dispositif suivant la revendication 2 ou 3,
**caractérisé en ce que**
dans le deuxième plan (yz) une distance focale (Fy) de la lentille (21) asphérique est sensiblement égale à la distance entre la lentille et la fibre optique.

5. Dispositif suivant la revendication 1,
**caractérisé en ce que**
- le deuxième système (30) optique comporte un miroir (33) plan et deux lentilles (31, 32) cylindriques ou une combinaison d'éléments optiques ayant un effet analogue,
- les lentilles sont disposées entre la fibre optique et le miroir plan,
- une première des lentilles (32) n'a pas de réfringence dans le premier plan (xz) et une deuxième des lentilles (31) n'a pas de réfringence dans le deuxième plan (yz).

6. Dispositif suivant la revendication 1,
**caractérisé en ce que**
- le deuxième système (50) optique comporte un miroir (53) plan, une lentille (51) sphérique et une lentille (52) cylindrique ou une combinaison d'éléments optiques ayant un effet analogue,
- les lentilles sont disposées entre la fibre (1, 2) optique et le miroir plan,
- la lentille (51) sphérique a la même réfringence (f51x, f51y) dans le premier plan (xz) et dans le deuxième plan (yz), et la lentille cylindrique n'a pas de réfringence dans le deuxième plan (yz).

7. Dispositif suivant la revendication 5 à 6,
**caractérisé en ce que**
dans le deuxième plan (xz) une distance focale (f32, f51y) de l'une des lentilles (32, 51) est sensiblement égale à la distance entre cette lentille et les fibres optiques.

8. Dispositif suivant la revendication 1,
**caractérisé en ce que**
- le deuxième système (40) optique comporte un miroir (42) cylindrique concave et une lentille (41) cylindrique ou une combinaison d'éléments optiques ayant un effet analogue,.
- la lentille cylindrique est disposée entre la fibre optique et le miroir cylindrique,
- la lentille (41) cylindrique n'a pas de réfringence dans le deuxième plan (yz) et le miroir (42) cylindrique est plan dans le premier plan (xz).

9. Dispositif suivant la revendication 8,
**caractérisé en ce que**
dans le deuxième plan (yz) une distance focale (f42) du miroir (42) cylindrique représente sensiblement la moitié de la distance entre le miroir cylindrique et la fibre optique.

10. Dispositif suivant l'une des revendications 8 à 9,
**caractérisé en ce que**
le dispositif est tel que plusieurs fibres (101 à 103) optiques disposées côte à côte peuvent être traitées thermiquement en parallèle, notamment peuvent être soudées en parallèle avec des fibres (201 à 203) optiques opposées correspondantes.

11. Dispositif suivant la revendication 10,
**caractérisé en ce que**
- une distance (ab) entre deux fibres (101, 102, 201, 202) optiques disposées côte à côte correspond au moins un diamètre (df) des fibres optiques,
- l'étendue (wy) du profil (4) du faisceau transversalement à un axe longitudinal de l'une des fibres optiques dans la zone de focalisation correspond au moins à la somme du diamètre (df) de toutes les fibres (101 à 103, 201 à 203) optiques se trouvant les unes à côté des autres et des distances (ab) entre elles, le profil (4) du faisceau s'étendant, sur une fibre (103, 203) optique la plus à l'extérieur, sur une longueur de l'ordre de grandeur d'au moins un diamètre (df) de l'une des fibres optiques.

12. Dispositif suivant la revendication 11,
**caractérisé en ce que**
- les fibres (101 à 103 , 201 à 203) optiques disposées côte à côte sont disposées au-delà d'un axe (A) médian du profil (4) du faisceau
- l'étendue (wy) du profil du faisceau transversalement à un axe longitudinal de l'une des fibres optiques dans la zone de focalisation correspond au double de la somme du diamètre de toutes les fibres optiques disposées côte à côte et des distances entre elles.

13. Dispositif suivant l'une des revendications 1 à 12,
**caractérisé en ce**
**qu'**il est prévu dans le deuxième plan (yz) un angle (α) entre un axe optique du premier système (OA1) optique et un axe optique du deuxième système (OA2) optique.

14. Dispositif suivant l'une des revendications 1 à 13,
**caractérisé en ce que** le premier système (10) optique a un élément (11) optique ayant un effet de diffraction.

15. Dispositif suivant l'une des revendications 1 à 14,
**caractérisé en ce que**
- le premier système (10) optique a un élément (11) optique pour diriger le faisceau (8) sur les fibres (1, 2) optiques à épisser,
- le dispositif a un moyen (7) d'entraînement des éléments (11) optiques, les éléments optiques pouvant être déplacés à l'aide du moyen d'entraînement de façon à ce qu'une position de la zone de focalisation du faisceau puisse être déplacée dans la direction (70) longitudinale de celui-ci, notamment périodiquement.
